# EUROPEAN PATENT APPLICATION

(11) **EP 3 037 059 A1**
(43) Date of publication of application: **29.06.2016**
(21) Application number: 14200096.7
(22) Date of filing: 23.12.2014
(51) Int. Cl.: A61C 9/00

(54) **Dental impression tray with identification means and method for allocation of the dental impression with a customer**

(71) Applicant: Heraeus Kulzer GmbH, 63450 Hanau (DE)
(72) Inventor: Reay, David, Nocton Lincoln, LN42BE (GB)
(74) Representative: Bendele, Tanja

(57) **Abstract**

The present invention provides a dental impression comprising at least one means for identification such like a code of the impression tray and/or for identification of a dental impression provided by the use of the dental impression tray. Furthermore, the means for identification allows a correlation of the obtained scanned digital data of the impression with a customer, wherein the customer may comprise a patient of a dentist. Therefore, the present invention provides a method for obtaining three dimensional digital data of a scanned dental impression, wherein the digital data belong to a 3D digital representation of the scanned dental impression and can be correlated with an individual patient by scanning the means for identification.

## Description

The present invention provides a dental impression comprising at least one means for identification such like a code of the impression tray and/or for identification of a dental impression provided by use of the dental impression tray. Furthermore, the means for identification allows a correlation of the obtained scanned digital data of the impression with a customer, wherein the customer may comprise a patient of a dentist. Therefore, the present invention provides a method for obtaining three dimensional digital data of a scanned dental impression, wherein the digital data belong to a 3D digital representation of the scanned dental impression and allows allocation with an individual patient by recording or scanning the means for identification.

The tray, which is sometimes named "dental spoon", serves during the impression-taking as a carrier or applicator for dental impression materials. There are two types of trays: prefabricated trays manufactured by the industry and customized trays. Prefabricated trays are available in various sizes for partially edentulous and edentulous jaws of patients. In addition, there are special trays for partially impression takings of the jaw. For a better accessibility of the tray comprising impression material, the tray may be perforated or has a bead-like thickened edge. Customized trays are usually made from a previous impression with a prefabricated tray. The customized tray may then be formed traditionally from a corresponding plaster model by the use of a thermoplastic plastic. The trays may be made from metal or hard plastic to allow them to press the impression material against the teeth.

Some customized individual trays are especially formed for functional impressions, with its edges/boundaries in the patient's mouth be exactly formed. In addition, individual trays may also be necessary for taking impressions in a situation with an exceptional form of the jaw, a jaw misalignment or misaligned teeth. Manufacturing a customized impression tray from a virtual model which is generated from a 3D digital representation of the patient's teeth are also possible and allow the manufacturing of a customized impression tray that fits more precisely to the teeth than a prefabricated one-size-fits-all impression tray. The placement of an impression tray in the patient's mouth is rarely a convenient situation and the discomfort is increased when the tray does not fit. Therefore, it is an advantage that the impression tray is customized to fit to the individual patients mouth situation.

The impressions of the teeth and jaws are passed to a dental laboratory, where replicas of the tooth situation and jaw situation with teeth or edentulous are used to be casted as a plaster model.

A disadvantage of the usual procedure for taking impression is that the dentist prepares the dental impression using a dental impression tray in the patient's mouth in which the impression material is cured. Afterwards the dental impression may be detached from the tray and send to a dental laboratory to allow casting of a plaster model or replica of the jaw, the edentulous jaw or the situation of the remaining teeth in the jaw. Therefore, there are many steps that are being performed manually in this process, wherein the step of collecting and sending of the impression to the dental laboratory is time consuming an expensive. Another disadvantage is that the impressions have to be labelled with the name of the patient and the dentist to allow the dental laboratory to send the manufactured prostheses back to the correct dentist.

It is therefore an objection of the invention to provide a product and a method that allow to provide a more cost-efficient process for taking an impression and using the impression to prepare a prosthesis. Another object of the present invention is to provide a product and a method for a more convenient allocation of the impression with the patient data.

The object of the present invention is solved by an impression tray according to claim 1, a method according to claim 5 and the use of the impression tray according to claim 17. Preferred embodiments are disclosed in detail in dependent claims and the description.

According to the invention an impression tray is provided comprising at least one identification means, wherein the identification means may be attachable and/or detachable and may comprises an electronic chip, scannable code or digitised scanning recognition device that can be placed upon or within a single or multiple use dental impression tray which will allow to follow on digital CAD and CAM intraoral prostheses (indirect dental restorations) to be fabricated by authorised dental practices and dental laboratories. The impression tray may be manufactured from metal, plastic or composite of any design.

The dental impression may be taken from at least a part of the maxilla, a toothless jaw/ edentulous jaw or a jaw with at least one tooth and/or the gingival of the upper and/or the lower jaw.

The technical problem to be solved by the invention was to prevent authorised or unauthorised personnel utilising of alternative dental products and systems that aid the manufacture of CAD/CAM dental prostheses other than that assigned after purchase of a specialised dental impression scanning device and recommended dental impression material. One problem of not recommended dental impression material is the poor quality of the impression that is much less accurate.

Digital data taken from a standard / traditional analogue dental impression need to be sent to the manufacturing facility. These data can only be sent if the dental impression tray or its contents are recognised by the scanning device. All these process steps need to be recorded and amount is a huge amount of paperwork and workflows.

The inventive tray and the method of the invention allow the allocation of the patient's data without the need of labelling the tray or the dental impression prior or after taking the impression. Furthermore, by the tray of the invention and the method of the invention, the process of scanning and allocation of the patient's data is accelerated.

In addition with the tray and method of the present invention it is possible to determine if the correct impression tray and/or impression material, in particular marked impression material, is used so that a quality check is possible right before sending the digital data to the dental laboratory. The quality of the impression, e.g. no bubbles, very fine lines, very fine topography of the gingiva, is a crucial point to enable the production of correct to perfect fitting prostheses.

Object of the present invention is a dental impression tray having a tray bottom, an inner boundary, in particular an inner wall, and an outer boundary, in particular an outer wall, wherein the tray bottom and the boundaries form the dental mould and the impression tray comprising at least one means for identification of the impression tray and/or a dental impression provided by use of the dental impression tray comprising at least one means for identification.

According to one embodiment of the present invention the use of the impression tray comprising the means for identification will mark the cured dental impression obtained in the tray. This embodiment allows a permanent labelling of the dental impression by solely use of the tray of the invention. Therefore, the means for identification may be a kind of Braille or contracted Braille or any 3D-dimensional code appropriate to individualise the dental impression with a recordable or scannable code for allocation with a patient.

As scanner normal scanners can be used such as a camera of a mobile phone, typical scanner or specific scanner comprising intra-oral-scanners. The scanner may use normal light sources, a laser, a red laser light or a blue LED light source. Wherein it is clear to the skilled person to select the identification means and the light source for the scan that they enable the detection of the identification means. For example to detect the fluorescent identification means the skilled person may select a blue LED in a scanner for the method of the invention.

According to one embodiment of the invention the inner boundary forms an inner wall and the outer boundary forms an outer wall. Wherein according to one embodiment, the inner and/or outer wall may comprise a means for identification that shall be transferred onto the cured impression material to enable a permanent allocation of the impression with patients data. The means onto the inner surface of the inner and/or outer wall and the means onto the impression fit like a plug and socket.

According to one embodiment of the invention a method is disclosed for obtaining a dental impression comprising at least one means for identification, wherein the method comprising the steps of (i) providing a polymerisable dental impression material in the dental mould of the tray of the invention with at least one means for identification, and (ii) taking an impression of a situation of a jaw of the patient, in particular curing the impression material, and transferring and providing a means for identification onto the cured impression material. The means for identification are transferred from the tray to the impression material (negative 3D) onto the cured impression material. Particular preferred positions of the means for identification are the inner surface of the anterior teeth of the outer wall or the inner surface of the bottom. A further embodiment of the present invention is therefore a dental impression obtainable by the afore mentioned process.

The dental mould of the tray possesses in a preferred embodiment a horse-shoe-shaping form, wherein the inner and the outer boundaries and the bottom of the tray form a U-shaped depression in form of a horse-shoe shaping. According to one embodiment of the present invention the bottom, the inner boundaries and/or the outer boundaries may exhibit voids to allow passing through the impression material before or during curing.

According to a further aspect of the present invention the at least one identification means comprises at least one electronic chip, scannable code, recordable code, in particular scannable optical code, pattern, hologram, optical refraction means, refraction indexed means, optical density means, translucent means, coloured means, laser etched code, or according to an alternative a digitised scanning recognition device, radio frequency identification (RFID), passive RFID-transponder (e.g. 13,56 MHz), near field transponder, bar code, 2D- or 3D-barcode and/or a combination of identification means. According to the invention the tray may comprise 1 to 30 identification means, in particular 1 to 5.

The identification means comprises or furnish in particular a code for a correlation of the tray or impression with a customer, wherein the customer may be selected from a patient, dental laboratory and/or dentist.

According to a further aspect of the present invention at least one identification means is a) attachable and/or detachable, b) positioned outside on the surface of the tray, at least partially or fully embedded in the tray or inside of the material of the tray. Therefore, the detachable or attachable identification means may be used several times, e.g. means for identification of the dental laboratory or the dentist. A further means for allocation of the patient may be selected form a predetermined list of identification means, in particular comprising codes. Such a list may comprise 1 to 100 fixed codes that can be used multiple times.

According to a further aspect of the present invention the tray comprises one to ten identification means, in particular one, two or three identification means, wherein the identification means may allocated to different information such as one defines the patient, the second the dental laboratory and the third the dentist.

According to a further aspect of the present invention the tray comprises at least one identification means and comprises in particular at least two identification means, wherein one identification means is positioned in or outside/upon the tray and one identification means is positioned outside on the inner surface of the tray to mark the dental impression provided by the use of the tray.

A further aspect provides a set of trays furnished with different identification means allowing the allocation of one tray to one patients data, wherein the set comprises at least two trays with different identification means such as a number, alphanumeric code, braille, contracted braille and/or characters to allow the identification of one tray per day to one patient by a dentist. Therefore, the next day the dentist may allocate one of the trays to patient's data of a different patient.

One embodiment of the present invention provides a method for obtaining three dimensional digital data of an at least partially scanned dental impression, comprising the steps (i) scanning a dental impression provided by use of the impression tray comprising at least one means for identification and recording or scanning of the means for identification, or inverse sequence of these steps, (ii) obtaining digital data belonging to a 3D digital representation of the scanned dental impression and digital data belonging to the means for identification. Scanning of a dental impression comprise the scanning of at least a part of the impression.

According to one aspect of the invention the digital data belonging to a 3D digital representation of the scanned dental impression, wherein the three dimensional (3D) digital data of the dental impression are obtained, processed, edited, stored, shared and/or transferred after detection of at least one identification means of the impression tray and/or the dental impression provided by use of the dental impression tray, in particular comprising at least one means for identification. According to the present invention the three dimensional data are allowed or enabled to be obtained, processed, edited, stored, shared and/or transferred after detection of at least one identification means, in particular to ensure good documented process steps or process chain. According to the invention the detection of the identification means effects the enabling of the three dimensional data for obtaining, processing, editing, storing, sharing and/or transferring them.

According to the invention an impression tray is provided comprising at least one identification means, wherein the identification means may be attachable and/or detachable and be an electronic chip, scannable code or digitised scanning recognition device that can be placed upon or within a single- or multiple-use dental impression tray that will allow to follow on digital CAD and CAM intraoral prostheses (indirect dental restorations) to be fabricated by authorised dental practices and dental laboratories. The impression tray may be manufactured from metal, plastic or composite of any design. Attachable and/or detachable means comprise a labelling e.g. magnetic or by self-adhesive labels.

One embodiment of the invention comprises a method for obtaining three dimensional digital data of an at least partially scanned dental impression, wherein the digital data belong to a 3D digital representation of the scanned dental impression; in particular the digital data of the 3D digital representation corresponds to a virtual model of the scanned dental impression. According to another aspect the digital data allow the simulation/generation of a virtual model of the dental impression.

According to one aspect of the invention the three dimensional digital data (x, y, z-coordinates e.g. in voxel) of the dental impression are obtained, recorded, processed, edited, stored, shared and/or transferred after detection, in particular after scanning or recognition, of at least the one identification means of the impression tray, in particular with a cured dental impression exhibiting a situation of a patients jaw and/or the dental impression provided by the use of the dental impression tray. In particular the dental impression also comprises at least one means for identification transferred by the use of the tray of the invention.

Alternatively, after detection of the identification means, the scanned digital data are recorded or stored and/or are allowed to be shared with and/or transferred to a computer readable medium, non-transitory computer readable medium and/or a computer cloud.

The method for obtaining three dimensional data according to the invention such as 3D-CAD data, STL-data, allow the transfer or sharing of the digital data of the 3D-digital representation (virtual model) to enable the production of a positive model by means of CAD/CAM and CNC cutting, CNC milling, wherein the milling may be performed through a 3 to 5 axis CNC milling machine. As an alternative for the production of a solid model 3D-printing, STL or SLA, stereolitography machines can be used.

One embodiment of the present invention provides a method for obtaining three dimensional digital data of an at least partially scanned dental impression, comprising the steps
(i) scanning a dental impression provided by use of the impression tray comprising at least one means for identification and recording or scanning of the means for identification, or inverse sequence of these steps, in particular preferred, wherein
   a) the scanning, in particular the whole scan comprising the completion of the scan, of the dental impression is enabled after recognition of the at least one identification means, Wherein in particular the completion of a scan and/or optional collecting and optional storage of the three dimensional data is enabled after recognition of the at least one identification means, in or particular a) the whole scanning of the dental impression and collecting an optional storage of the three dimensional data is enabled after recognition of the at least one identification means, and/or obtaining digital data belonging to a 3D digital representation of the scanned dental impression and digital data belonging to the means for identification, in particular
   b) storaging of the three dimensional data of the scanned dental impression starts after recognition of at least one identification means, and/or
   c) sharing of the three dimensional data of the scanned dental impression is possible after recognition of at least one identification means,
   d) computer modelling of the three dimensional data of the scanned dental impression is possible after recognition of at least one identification means, and/or
   e) transfer of the three dimensional data of the scanned dental impression is enabled after recognition of at least one identification means and/or
(ii) the digital data of the identification means identify the patient, the dental laboratory and/or the dentist. Alternatively the digital data of the identification means allow an allocation of the patient, dentist and/or dental laboratory.

According to a) after scanning of the means for identification the scan of the tray is allowed/enabled to be completed. Therefore, according to the a method of the invention the term "obtaining" the three dimensional digital data of an at least partially scanned dental impression also comprises the step - enable the completion of the scanning or recording after the identification means was scanned or recorded. This particular feature prohibits the obtaining, scanning and/or storing of trays which do not possess the identifications means.

According to one embodiment of the invention, the dental impression represents a counterpart of the dental and/or gingiva situation of a patient's mouth, in particular a detailed accurate counterpart, e.g. corresponds to a cast of the dental and/or gingiva situation of a patient's mouth. The dental impression comprising the counterpart of at least a part of the patient's mouth was taken from a jaw of a patient's mouth, the upper jaw or the lower jaw.

Likewise, an embodiment of the invention is a method, wherein a) digital data of the impression and b) patient's information and/or digital data of a scanned mouth, in particular the coloured gingiva and/or coloured teeth, are linked with the digital data of the impression. The digital representation of the impression can be transferred into a 3D representation of the jaw situation of the patient. This embodiment allows the production of a genuine reproduction of the gingival and teeth situation of the jaw(s) in an individually produced prosthesis from the digital data.

According to one embodiment of the invention of the method, the digital data representing a 3D digital representation of the scanned dental impression are used to generate a virtual model of at least a part of the patients jaw. In a further step the digital data of the representation of the scanned dental impression or a virtual model that may be further modified/modulated can be used in a computer program of a machine executing an ablating procedure, e.g. a CNC milling machine, or a machine executing a reconstructive procedure, e.g. a 3D-printer, stereolitography, laser sintering, milling etcetera.

The method according to the invention may further comprise a step, wherein the digital data are used for the manufacturing of a customized impression tray, wherein the customized impression tray comprises full and partial impression trays as well a single and double trays, a part of a prosthesis, a prosthesis, for positioning of at least one implant, for manufacturing of at least one implant, abutment, at least a part of a denture or a full denture, denture skeleton, upper denture, immediate replacement denture, artificial tooth/teeth, denture bar, gingival prosthesis, tooth bridge and/or superstructure.

A further embodiment of the invention comprises a computer program product comprising program code means for causing a data processing system to perform the method of any one of the preceding claims, when said program code is executed on the data processing system. In particular the computer program product further comprises program code means for recognition of the at least one identification means of the impression tray and/or the dental impression provided by the use of the dental impression tray during the obtaining of the digital data in the scanning process of the impression, before storing the digital data and/or to allow the transfer of the digital data to a second computer readable medium or a computer readable storage medium. One embodiment of the invention comprising a computer program product comprising a computer-readable medium having thereon the program code means. According to one embodiment of the invention a non-transitory computer readable medium is comprised storing thereon a computer program, where said computer program is configured for causing computer assisted data processing to perform the method of the invention, when the program code means are executed on the data processing system.

A further embodiment comprises the use of at least one means for identification on/upon an impression tray for identification marking of digital data obtained by scanning the impression tray and/or for identification marking of the dental impression provided by the use of the dental impression tray comprising an identification means.

Dental impression material does not necessarily need to comprise an additional identification means. The method of the invention allows detecting the impression material by detection of intrinsic identification means, in particular intrinsic identification marks. These marks can be detected by a taking a normal photo, in particular by using the flash and analysing the digital data with stored data of a reference product. In an alternative the dental impression material can comprise at least one identification means such a chemical marker etc.

In the following the invention will be described in more detail with the aid of exemplary embodiments and by referring to the figures. Thereby, all described and/or figuratively illustrated characteristics by themselves or in any meaningful combination constitutes the subject matter of the invention.

### Schematically shown are:

Figures **1a****/b:** Impression tray **1** with means for identification **8**
Figures **2a****/b:** Full **2a** and partial **2b** impression tray **1, 1 a, 1b**
Figure **4****:** Impression tray **1a** with palate roof **9** and voids **10**
Figure **5****:** Double impression tray **1c -** dual-arch tray horse-shoe-arched
Figure **6****:** Partial, double impression tray **1d** - dual, part tray
Figure **7****:** Customized impression tray
Figure **8****:** Dental impression in an impression tray

**References: 1 -** impression tray, as single arch tray, **1a** horse-shoe shaping, **1b** part tray for taking impression of a part of the jaw, **1c** dual-arch tray horse-shoe-shaping or **1d** part tray; **2 -** tray bottom; **3 -** boundary, in particular inner boundary, inner wall; **4 -** outer boundary, in particular outer wall; **5/5u -** U-shaped mould (comprising inner boundary, bottom tray and outer boundary); **6a**, **6b -** posterior regions; **6c -** anterior region; **7 -** handle bar; **8 -** means for identification, **8.1** positioned on the surface and on the inner surface of the U-shaped mould to mark the impression, **8.2** positioned inside of tray, inside of the material of the tray or at least partially embedded; **9 -** palate roof; **10 -** through-holes/voids; **11 -** impression; **12-**dental mould of tray

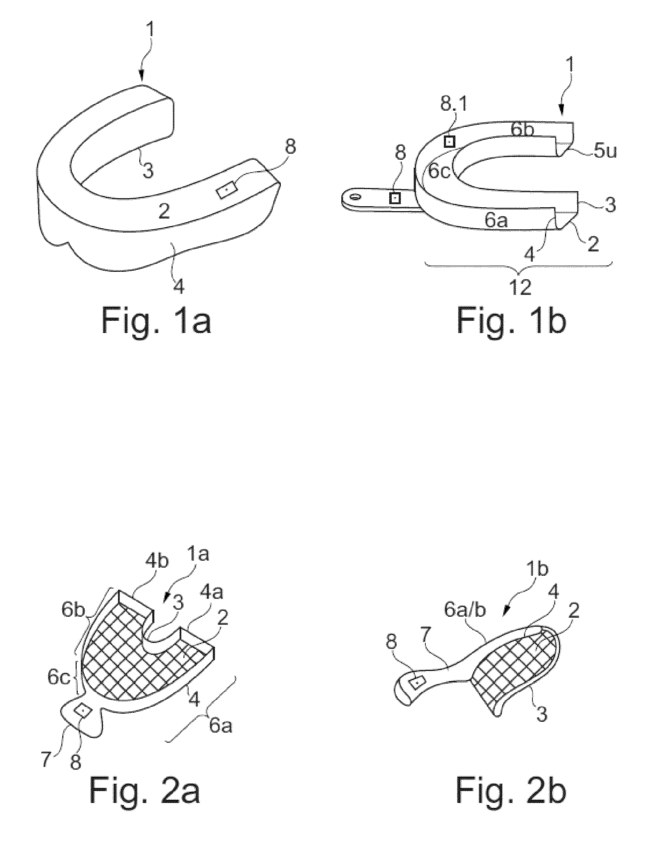

The method of the invention ensures a systematic approach to use of appropriate impression material and/or tray and to create a standardised quality process to prevent the use of digital data obtained with not authorised materials. The quality of the fitting of the tray and/or the precision of the cured impression material is decisive for the fitting of dental prostheses or parts thereof. Impression tray **1** illustrated in Figure **1** through **6** is formed by a tray bottom **2,** an inner boundary **3** and an outer boundary **4,** wherein the tray bottom **2** and the boundaries **3, 4** form the dental mould **12.** Furthermore, the inventive tray comprises at least one means for identification **8** of the impression tray **1,** wherein impression trays **1a**, **1b, 1c** and **1d** according to figures **2a**, **2b****,** **4, 5** and **6** show specific embodiments of the impression tray of the present invention.

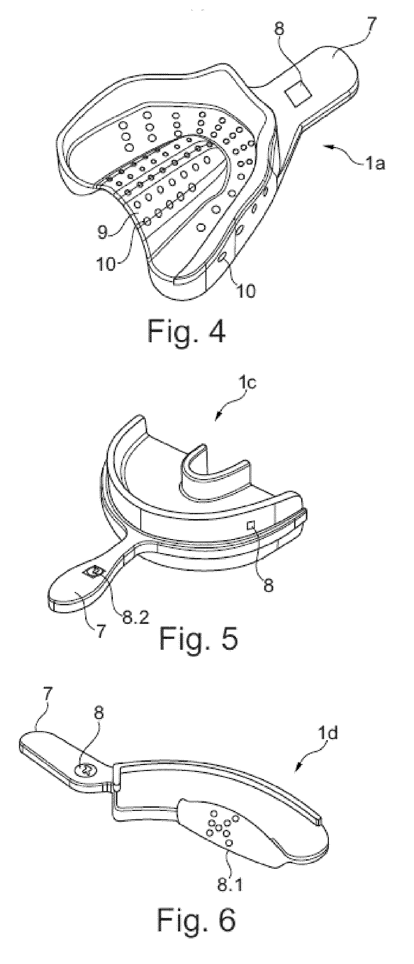

Figures **2b** and **6** show a normal partial impression tray **1** and a double partial impression tray **1** with identification means **8.** Figure **4** discloses an impression tray with a palate roof **9** and through-holes/voids **10.** Figures **2a** and **2b** describe impression trays **1a** horse-shoe shaping and 1 **b** part tray for taking impression of a part of the jaw with a grid in the bottom **2** of the tray or a perforated bottom **2** of the tray.

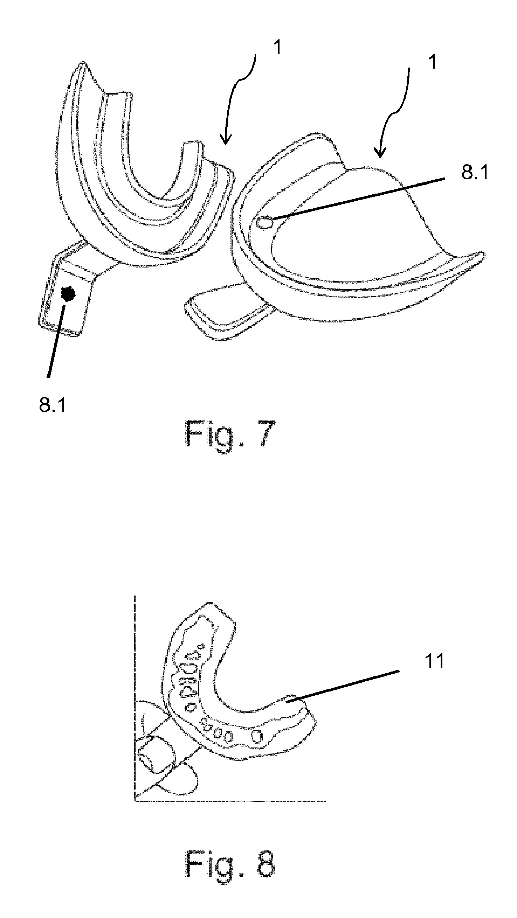

A dental impression **11** provided by the use of the dental impression tray according to the invention is shown in Fig. **8** (the identification means 8 are not shown). The dental mould **12** of the tray is formed by the U-shaped mould formed by the inner boundary **3,** the tray bottom **2** and the outer boundary **4** which are formed to in a horse-shoe shaping. In figure 7 the inner boundary is formed by the roof **9.** In a preferred embodiment of the invention the identification means **8, 8.2** are positioned at the handle (Fig. **1 b****, 2a****, 2b****, 4,** 5, **6****, 7** and **8** (not shown)).

The identification means comprises at least one intrinsic means for identification, one electronic chip, scannable code, in particular a scannable optical code, pattern, hologram, optical refraction means, refraction indexed means, optical density means, optical spectrum, translucent means, coloured means, laser etched code, digitised scanning recognition device, radio frequency identification (RFID), passive RFID-transponder, near field transponder, bar code, 2D- or 3D-barcode and/or a combination of identification means. In a preferred embodiment the identification means comprises a scannable optical code or a code in a kind of a Braille code, wherein the means may be attachable and detachable. In an alternative embodiment the identification means can be a 2D-/3D barcode. In a further alternative the identification means comprises an electronic chip on which personal data of the patient and/or the specific situation can be stored on and are readable or scannable by scanning the cured impression. The at least one intrinsic means for identification can comprise an optical feature that is detectable by measuring and analysing an optical spectrum such as an IR-spectrum, UV/Vis-spectrum or an fluorescence spectrum of the material the tray is made of or a compound or material the tray may comprise. Therefore, the optical feature can be a pigment, in particular an organic pigment, organic fluorescent pigment, such a rhodamine, e.g. rhodamin B, a cumarine, fluorescent alkaloid, metabolites or decomposition products of chlorophyll or derivates of the aforementioned pigments. Most preferred is a food colorant or a food fluorescent. For the detection of the fluorescent spectrum, UV-light of e.g. 366 nm may be used wherein all suitable wavelengths can be used.

In a further alternative customized impression trays according to Figure **7** can be furnished with identification means **8.1** to allow the identification of the patient at any time during the whole process chain from taking the first impression **11** for the manufacturing of a customized impression tray **1** with which a very precisely impression can be taken. The identification means can be an RIFID or an electronic chip on which patient's information can be stored.

Figures **1a****/b, 2a/b, 4, 5, 6** describe possible positions of the identification means **(8, 8.1, 8.2).** Figure **1 b** shows identification means **8.1** on the outer boundary **2** in the anterior region **6c** which enables the tray to mark **8.1** the dental impression provided by the use of the tray.

The such marked dental impression can be always be allocated with a specific patient or patient an date, e.g. the situation the dental impression was taken.

According to the invention the identification means can be attachable and/or detachable, and can be positioned outside on the surface of the tray **8,** see Figure **8** with means **8.1** on the handle and Figure **6** for a part tray e.g. partial, double impression tray **1c** on the handle **7** see **8** or outside on the inner boundary **3.** Figure **5** shows a double impression tray **1c -** dual-arch tray horse-shoe-shaping with identification means **8.2** embedded in the handle (not visible in reality) and a further identification means outside on the outer wall **4.** The identification means can be at least partially embedded **8.2** in the tray see Figure **5** and/or inside of the tray.

Subsequently, the method of the invention will be described in more detail. In a first step the impression tray with an identification means e.g. an electronic chip is furnished with patient information on the chip. In a second step, the curable impression material and the impression tray **1,** in particular with identification means for marking the cured impression, is used for taking the impression. Afterwards from the cured dental impression **11** the three dimensional digital data of an at least partially scanned dental impression **11** are obtained, comprising the steps
(i) scanning the dental impression **11** and recording, readout or scanning of the means for identification, or inverse sequence of these steps. Therefore, it is also possible to first do the recording, reading-out or scanning of the means and afterwards scanning the cured impression **11.** In the next step the obtained digital data belonging to a 3D digital representation of the scanned dental impression and the digital data belonging to the means for identification, e.g. allocation specific information of the patient are further processed. According to an alternative of the invention the digital data of the impression and the digital data of a scanned mouth, in particularly the coloured gingival and coloured teeth, are linked with the digital data of the impression. The so obtained data allow the production of a very naturally occurring gingiva of the patient mouth as the digital data represent a 3D digital representation of the scanned dental impression and optionally a coloured representation of the gingiva and/or teeth, which are used to generate a virtual model of at least a part of the patients jaw.

A typical method of manufacturing a solid model of a patient jaw comprising the steps of:
- taking an impression of the patient's jaw situation, in particular the teeth, implants, healing abutments, gingiva and so on, optional preparing a solid model e.g. made of gypsum or plastic, comprising implant analogs, healing abutments, the teeth and gingiva situation. This model is optional scanned. According to the method of the invention it is preferred to scan the dental impression for the preparation of the above mentioned model. Therefore, the method of the invention reduces the overall steps in the process for the manufacturing of prosthesis. The scanned dental impression is used for generating/obtaining digital data belonging to a 3D digital representation of the scanned dental impression and the digital data belonging to the means for identification. The digital representation of the impression will be transferred to a 3D representation of the jaw situation of the patient. From these data and optional after modelling of the data the manufacturing of a part of a prosthesis or prosthesis can be done by ablative or constructive 3D processes.

This further processing can comprise editing, storing, sending via online means, sharing, e.g. storing in a computer cloud, and/or transferring of the 3D and individual data of the patient. The so obtained three dimensional data and the data obtained from the identification means can be transformed by computer modelling. According to one key subject of the invention the identification means has to be recognised to enable the storing, transferring, sharing and/or modelling of the obtained three dimensional data and/or the data of the identification means. By recognition of the identification means the data are allowed to be transferred and/or modified for the production of a dental prosthesis. The process of the invention therefore allows avoiding the usage of equipment with a reduced quality, e.g. low quality impression material with low resolution/low precision. The reduced quality is a frequent trigger in the production non perfect fitting or less fitting prostheses or parts thereof manufactured by automatically ablative or constructive processes such as in particular CAD/CAN and CNC or constructive processes such as stereolithographic processes, laser sintering, laminated-object manufacturing, solid ground curing or other known constructive or ablative processes.

From the so obtained and scanned dental impression according to Figure 8 the production of a model of the gingiva, edentulous gingiva and/or dental arch can be produced via computer aided processes as well as the laboratory analog and/or prostheses. The method of the invention ensures the use of high quality and materials with high accuracy in a computer aided automated processes to ensure best fit of the so produced prostheses. The method and the tray of the invention avoid deficiencies in the so obtained prostheses.

The method of the invention allows also the manufacturing of further mentioned products with high quality, in particular a best suited dental impression and/or impression tray to ensure good fitting dental parts such as: a customized impression tray, wherein the customized impression tray comprises full and partial impression trays as well a single and double trays, a prosthesis, for positioning of at least one implant, for manufacturing of at least one implant, abutment, at least a part of a denture or a full denture, denture skeleton, upper denture, immediate replacement denture, artificial tooth, denture bar, gingival prosthesis, tooth bridge and/or superstructure.

## Claims

1. Dental impression tray (1, 1 a, 1 b, 1 c, 1 d) having a tray bottom (2), an inner boundary (3) and an outer boundary (4), wherein the tray bottom (2) and the boundaries (3,4) form the dental mould (12) and the impression tray comprising at least one means for identification (8) of the impression tray (1, 1 a, 1 b, 1 c, 1 d) and/or a dental impression (11) provided by the use of the dental impression tray.

2. Tray according to claim 1, wherein the at least one identification means comprises at least one intrinsic means for identification, one electronic chip, scannable code, in particular scannable optical code, pattern, hologram, optical refraction means, refraction indexed means, optical density means, optical spectrum, translucent means, coloured means, laser etched code, digitised scanning recognition device, radio frequency identification (RFID), passive RFID-transponder, near field transponder, bar code, 2D- or 3D-barcode and/or a combination of identification means.

3. Tray according to claim 1 or 2, wherein the at least one identification means is
a) attachable and/or detachable,
b) positioned outside on the surface of the tray (8.1), at least partially embedded (8.2) in the tray and/or inside of the tray.

4. Tray according to any of claims 1 to 3, wherein the at least one identification means comprises at least two identification means, wherein one identification means is positioned at least partially embedded (8.2), inside (8.2) of the tray or outside (8.1) of the tray and one identification means is positioned outside on the surface of the tray to mark (8.1) the dental impression provided by the use of the tray.

5. Method for obtaining three dimensional digital data of an at least partially scanned dental impression (11), comprising the steps
(i) scanning a dental impression (11) provided by the use of the impression tray (1) comprising at least one means for identification (8) and
recording or scanning of the means for identification, or inverse sequence of these steps,
(ii) obtaining digital data belonging to a 3D digital representation of the scanned dental impression and digital data belonging to the means for identification.
wherein the digital data belong to a 3D digital representation of the scanned dental impression, wherein the three dimensional (3D) digital data of the dental impression are obtained, processed, edited, stored, shared and/or transferred after detection of at least one identification means (8) of the impression tray (2) and/or the dental impression (11) provided by the use of the dental impression tray (2) comprising at least one means for identification (8) and in particular enabling of the three dimensional data.

6. Method according to claim 5,
wherein (i)
a) the scanning of the dental impression is enabled after recognition of the at least one identification means, and optional collecting and optional storage of the three dimensional data is enabled after recognition of the at least one identification means,
b) storing of the three dimensional (3D) data of the scanned dental impression starts after recognition of the at least one identification means,
c) sharing of the three dimensional data of the scanned dental impression is possible after recognition of the at least one identification means,
d) computer modelling of the three dimensional data of the scanned dental impression is possible after recognition of the at least one identification means, and/or
e) transferring of the three dimensional data of the scanned dental impression is enabled after recognition of the at least one identification means and/or
(ii) the digital data of the identification means identify the patient, the dental laboratory and/or the dentist.

7. Method according to claim 5 or 6, wherein the dental impression is a counterpart of the dental and/or gingiva situation of a patient's mouth.

8. Method according to any of claims 5 to 7, wherein
a) digital data of the impression and
b) patient's information and/or digital data of a scanned mouth are linked with the digital data of the impression.

9. Method according to one of claims 6 to 9, wherein the digital data representing a 3D digital representation of the scanned dental impression are used to generate a virtual model of at least a part of the patients jaw.

10. Method according to one of claims 5 to 9, wherein the digital data are used for the manufacturing of a customized impression tray, a part of a prosthesis, a prosthesis, for positioning of at least one implant, for manufacturing of at least one implant, abutment, at least a part of a denture or a full denture, denture skeleton, upper denture, immediate replacement denture, artificial tooth, artificial teeth, denture bar, gingival prosthesis, tooth bridge and/or superstructure.

11. Computer program product comprising program code means for causing a data processing system to perform the method of any one of the preceding claims, when said program code are executed on the data processing system.

12. Computer program product according to claim 11, wherein the computer program comprises program code means for recognition of the at least one identification means of the impression tray and/or the dental impression provided by the use of the dental impression tray during the obtaining of the digital data in the scanning process of the impression, before storing the digital data and/or to allow the transfer of the digital data to a second computer readable medium or a computer readable storage medium.

13. Computer program product according to claim 11 or 12, comprising a computer-readable medium having thereon the program code means.

14. A non-transitory computer readable medium storing thereon a computer program, where said computer program is configured for causing computer assisted data processing to perform the method of any one of claims 5 to 10, when the program code means are executed on the data processing system.

15. Process for obtaining a dental impression comprising at least one means for identification, comprising the steps of
(i) providing a polymerisable dental impression material in the dental mould of the tray with at least one means for identification, in particular according to claims 1 to 4,
(ii) taking an impression of a situation of a jaw of the patient, in particular curing the impression material, and transferring and providing at least one means for identification onto the cured impression material.

16. Dental impression obtainable by a process according to claim 15.

17. Use of at least one means for identification (8) on an impression tray (1, 1 a, 1 b, 1 c, 1 d) for identification marking of digital data obtained by scanning of the impression tray, and/or for identification marking of a dental impression (11) provided by the use of the dental impression tray.
